**Europäisches Patentamt**

**European Patent Office**

**Office européen des brevets**

(11) Publication number: **0 140 488**
**B1**

# (12) EUROPEAN PATENT SPECIFICATION

(45) Date of publication of patent specification: **20.04.88**

(21) Application number: **84305235.8**

(22) Date of filing: **01.08.84**

(51) Int. Cl.⁴: **B 60 T 15/04**

(54) Dual circuit fluid pressure control valve.

(30) Priority: **20.08.83 GB 8322483**

(43) Date of publication of application:
**08.05.85 Bulletin 85/19**

(45) Publication of the grant of the patent:
**20.04.88 Bulletin 88/16**

(84) Designated Contracting States:
**AT BE CH DE FR IT LI NL SE**

(56) References cited:
**GB-A-1 466 296**

(73) Proprietor: **BENDIX LIMITED**
**Douglas Road**
**Kingswood, Bristol BS15 2NL (GB)**

(72) Inventor: **Fogg, Stephen Walter**
**37 Millmead Road**
**Bath BA2 3JP (GB)**

(74) Representative: **Turner, Alan Reginald**
**BENDIX LIMITED Douglas Road**
**Kingswood, Bristol BS15 2NL (GB)**

Courier Press, Leamington Spa, England.

## Description

This invention relates to dual circuit fluid pressure control valves and relates especially, but not exclusively to dual circuit compressed air control valves for vehicle braking circuits.

The Specification of United Kingdom Patent GB—A—1,466,296 describes a dual circuit brake valve for use in fluid pressure-operated vehicle braking apparatus embodying two independent braking circuits. The dual circuit valve comprises a housing provided with two sets of ports to be associated respectively with the two braking circuits. Two coaxial double valve assemblies are operative when actuated to seal off respective delivery ports from an exhaust port and to connect them to related input ports to derive pressure from respective pressure sources. An upper valve assembly is carried by a first pressure responsive member and arranged to be movable to lap-off when an applied input force and the delivered fluid pressure are in balance. The delivered pressure acts as an input signal pressure also on a further pressure responsive member carrying a second dual valve which also is arranged to lap-off when the delivered pressure thereof balances the signal pressure. Such a valve design with two valves in tandem may present a problem owing to the mechanical interaction between the two mechanisms of the two valves and interdependence of their operating characteristic. The result can be that the upper double valve may produce less than a desired output pressure if the pressure source of the other valve drops appreciably or if the output of the other valve falls to zero due to circuit failure.

According to the present invention there is provided a dual circuit fluid pressure control valve apparatus including a housing and main moving means for moving first pressure responsive means movement of which in one direction is effective to operate a double valve in a sense to close a path between a first delivery port and atmosphere and open a path between a first fluid pressure input port and the delivery port resulting output pressure at the delivery port acting on said pressure responsive means in the opposite sense and also acting on second pressure responsive means the sense of movement of which in response to increase of said output pressure is to operate a second double valve in a sense to close a path between a second fluid pressure delivery port and atmosphere and to open a path between a second fluid pressure input port and said second delivery port resulting pressure acting on the second pressure responsive means in the opposite sense to cause lapping of the second valve characterised by said main moving means having a range of movement which can limit the pressure at the first delivery port said first pressure responsive means having a discreet pressure responsive area pressure on which corresponding to the presence of fluid pressure at the second delivery port acts in a sense to assist the action on the first pressure responsive member of the fluid pressure at the first delivery port.

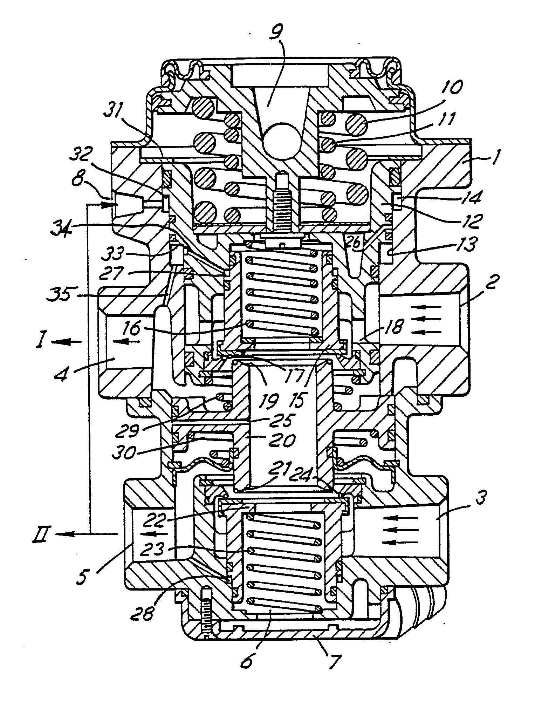

In order that the invention may be more clearly understood and readily carried into effect the same will be further described by way of example with reference to the accompanying drawing which illustrates in sectional diagrammatical form one embodiment of such a dual circuit fluid pressure control valve.

Referring to the drawing, the dual circuit fluid pressure control valve illustrated therein is designed as a tandem foot valve for use in a dual circuit fluid pressure operable vehicle braking system. The valve apparatus comprises an assembly of two valves contained in a main housing denoted by reference 1, the housing having a first reservoir input port 2 a second reservoir input port 3, a first circuit delivery port 4 and a second circuit delivery port 5. The whole assembly has a central passage 6 vented through a vent cap 7. In the example shown the output port 5 is indicated as connected not only to a second circuit II but also connected to port 8 of the valve. The connection between ports 5 and 8 is shown externally in the drawing but may be incorporated in the body of the housing.

The valve assembly is provided with main moving means comprising a plunger 9 engageable by a driver's foot pedal mechanism to act through springs 10 and 11 on pressure responsive means in the form of a piston 12 slideable in a cylindrical portion 13 of the housing. The downward movement of the plunger 9 is limited by a stop 31 to limit the output pressure obtainable. The piston 12 is stepped outwardly to provide a discreet annular pressure responsive area 32 the inner diameter of which corresponds to the diameter of the cylinder wall 13. The port 8 communicates with the annular area 32 of the piston the pressure acting against the force of the springs 10 and 11. The piston 12 is also stepped inwardly to provide a region 33 via which and two passages 34 and 35 the delivery port 4 is connected to a region 27 to be referred to below.

Piston 12 carries a sealingly slideable double valve member 15 of a first valve which is urged by a light spring 16, towards a delivery valve seat 17 carried within the piston skirt 18. Of slightly less diameter than the delivery valve seat 17 an exhaust valve seat 19 is provided for the first valve, this exhaust valve seat being carried by second pressure responsive means in the form of a central piston assembly 20 which also carries a corresponding exhaust valve seat 21 for a second valve.

The second valve comprises a sealingly slideable valve member 22 in the main housing which is urged by a light spring 23 towards a delivery valve seat 24. The diameter of 24 is substantially the same as 17 and somewhat larger than the diameter of the exhaust valve seat 21 carried by the piston 20.

Piston 20 is provided with a venting passage 25 between a pair of 'O' rings to avoid the possibility of interaction of pressures leaking from above and below the piston. Similarly, the piston 12 is provided with a venting passage 26 between a pair of 'O' rings to prevent 'O' ring leakage causing communication between the delivery output ports 4 and 5 to the respective circuits I and II.

The areas of the respective valve members in the respective lap positions presented between the diameters of the inlet and exhaust valve seats are compensated for in known manner by providing communications between the respective delivery pressure ports 4 and 5 and respective small areas 27 (referred to above) and 28 created on the valve members.

Referring now to the operation of the dual circuit pressure control valve, the ports 2 and 3 are assumed to be connected to separate reservoirs each charged to a pressure of approximately 11 bar. In the position of the assembly as shown, the driver's foot pedal is released so that plunger 9 is at its upper stop position under the influence of the return springs 29 and 30 acting through piston 12 and springs 10 and 11. Upon depression of the driver's foot pedal the plunger 9 is moved in the downward direction in the drawing. The force transmitted through springs 10 and 11 to piston 12 thereby moves piston 12 downwards to close off exhaust seat 19 and unseat the delivery valve seat 17 from valve member 15. Reservoir pressure at port 2 is therefore passed through port 2 to the port 4, this pressure also acting above the piston 20. When the output pressure at port 4 acting on the effective area of the piston 12 has risen sufficiently as to compensate for the force of springs 10 and 11, the first valve moves to a lap position.

Considering now the second valve, the pressure acting on the top side of piston 20 urges this piston downwards to operate the second valve 22 by closing the exhaust seat 21 and opening the delivery seat 24 until the pressure at port 5, which also acts under the piston 20, is such as to urge the piston 20 upwards to a balanced position.

The maximum output pressure of both valves in the normal working conditions are determined by the amount of travel which is provided for the plunger 9 and by the combined rates of springs 10 and 11. Considering now a fault condition under which the source of pressure to the second valve at port 3 falls say, to zero pressure, the effect of this is that owing to the lack of pressure in operation acting on the underside of piston 20, the upper or first valve assembly in piston 12 attains its lap condition at a position of the piston 12 which is lower than normal. Accordingly, the amount of compression force which can be applied to springs 10 and 11 before plunger 9 reaches its lower stop is reduced. There would be a corresponding reduction of the available output pressure at port 4 were it not for the provision of the discreet annular area defined by the diameters of the cylindrical walls 13 and 14 and to which the circuit II pressure is normally applied. In the failure condition here envisaged the pressure is therefore removed from port 8 and the effective reaction area of piston 12 is reduced. This area reduction is suitably chosen to compensate for the reduced compression referred to above the springs 10 and 11.

In the case of failure of the pressure source to the first valve at port 2, there is a resultant loss of reaction pressure on the underside of piston 12 and piston 12 moves downwards to engage piston 20 after first closing off exhaust valve seat 19. Piston 20, therefore, operates with direct mechanical connection to the springs 10 and 11 and the second valve laps at a pressure output to circuit II whereat equilibrium is established between the pressure acting under piston 20, the same pressure acting through port 8 on the annular area of piston 12 and the opposing force of springs 10 and 11 as applied by the foot pedal. Thus, circuit II continues to operate.

It will be appreciated from the foregoing that by virtue of the present invention a tandem dual circuit pressure control valve can be provided wherein although a controlling member acting through a spring is given a limited travel to limit the available output pressure, an undesired pressure limitation on a first valve can be prevented from accompanying a failure of the second valve output, by applying the latter to a discreet predetermined area of a pressure responsive member associated with the first valve.

**Claims**

1. A dual circuit fluid pressure control valve apparatus including a housing (1) and main moving means (9) for moving first pressure responsive means (12) movement of which in one direction is effective to operate a double valve (17) in a sense to close a path between a first delivery port (4) and atmosphere and open a path between a first fluid pressure input port (2) and the delivery port, resulting output pressure at the delivery port acting on said pressure responsive means in the opposite sense and also acting on second pressure responsive means (20) the sense of movement of which in response to increase of said output pressure is effective to operate a further double valve (22) in a sense to close a path between a second fluid pressure delivery port (5) and atmosphere and to open a path between a second fluid pressure input port (3) and said second delivery port (5) resulting pressure acting on the second pressure responsive means in the opposite sense to cause lapping of the second valve characterised by said main moving means having a range of movement which can limit the pressure at the first delivery port said first pressure responsive means (12) having a discreet pressure responsive area (32) pressure on which corresponding to the presence of fluid pressure at the second delivery port (5) acts in a sense to assist the action on the first pressure responsive member (12) of the fluid pressure at the first delivery port (4).

2. A dual circuit fluid pressure control valve as claimed in claim 1 characterised by the discreet pressure responsive area being so dimensioned that the limited fluid pressure obtainable at the first delivery port (2) in the absence of fluid pressure at the second delivery port (5) is substantially the same as that obtainable with normal full pressure at the second delivery port (5).

3. A dual circuit fluid pressure control valve as claimed in claim 1 or 2 characterised by said first pressure responsive means (12) comprising a stepped piston.

4. A dual circuit fluid pressure control valve as claimed in claim 1, 2 or 3 characterised by valve member and delivery valve seat of the first valve (15, 17), being carried in the first pressure responsive means (12) and valve member and delivery valve seat of the second valve (22, 24) being located in the housing and the respective exhaust valve seats (19, 21) being carried by the second pressure responsive member (20).

## Patentansprüche

1. Zweikreis-Fluiddrucksteuerventilvorrichtung, umfassend ein Gehäuse (1) und eine Hauptbewegungseinrichtung (9) zum Bewegen einer ersten auf Druck ansprechenden Einrichtung (12), deren Bewegung in einer Richtung wirksam ist, ein Doppelventil (17) in einem Sinn zu betätigen, einen Weg zwischen einer ersten Abgabeöffnung (4) und der Atmosphäre zu schließen und einen Weg zwischen einer ersten Fluiddruckeingangsöffnung (2) und der Abgabeöffnung zu öffnen, wobei sich ergebender Ausgangsdruck an der Abgabeöffnung auf die auf Druck ansprechende Einrichtung in entgegengesetztem Sinn und auch auf eine zweite auf Druck ansprechende Einrichtung (20) wirkt, deren Bewegungsrichtung beim Ansprechen auf eine Erhöhung des Ausgangsdruckes wirksam ist, ein weiteres Doppelventil (22) in einem Sinn zu betätigen, einen Weg zwischen einer zweiten Fluiddruckabgabeöffnung (5) und der Atmosphäre zu schließen und einen Weg zwischen einer zweiten Fluiddruckeingangsöffnung (3) und der zweiten Abgabeöffnung (5) zu öffnen, wobei sich ergebender Druck auf die zweite auf Druck ansprechende Einrichtung in der entgegengesetzten Richtung wirkt, um ein Überlappen des zweiten Ventils hervorzurufen, dadurch gekennzeichnet, daß die Hauptbewegungseinrichtung einen Bewegungsbereich hat, der den Druck an der ersten Abgabeöffnung begrenzen kann, die erste auf Druck ansprechende Einrichtung (12) einen getrennten auf Druck ansprechenden Bereich (32) hat, wobei Druck an diesem Bereich entsprechend dem Vorhandensein von Fluiddruck an der zweiten Abgabeöffnung (5) in einem Sinn wirkt, die Wirkung des Fluiddrucks an der ersten Abgabeöffnung (4) auf den ersten auf Druck ansprechenden Teil (12) zu unterstützen.

2. Zweikreis-Fluiddrucksteuerventil nach Anspruch 1, dadurch gekennzeichnet, daß der getrennte auf Druck ansprechende Bereich derart dimensioniert ist, daß der begrenzte Fluiddruck, der an der ersten Abgabeöffnung (4) bei Nichtvorhandensein von Fluiddruck an der zweiten Abgabeöffnung (5) erhalten werden kann, im wesentlichen der gleiche ist wie derjenige, der beim normalen vollen Druck an der zweiten Abgabeöffnung erhalten werden kann.

3. Zweikreis-Fluiddrucksteuerventil nach Anspruch 1 oder 2, dadurch gekennzeichnet, daß die erste auf Druck ansprechende Einrichtung (12) einen abgestuften Kolben aufweist.

4. Zweikreis-Fluiddrucksteuerventil nach Anspruch 1, 2 oder 3, dadurch gekennzeichnet, daß ein Ventilglied und ein Abgabeventilsitz des ersten Ventils (15, 17) in der ersten auf Druck ansprechenden Einrichtung (12) getragen sind, und daß ein Ventilglied und ein Abgabeventilsitz des zweiten Ventils (22, 24) in dem Gehäuse angeordnet sind, und die betreffenden Auslaßventilsitze (19, 21) durch den zweiten auf Druck ansprechenden Teil (20) getragen sind.

## Revendications

1. Dispositif à valve de régulation de pression pour double circuit de fluide comprenant un boîtier (1) et un moyen de mouvement principal (9) destiné à provoquer le déplacement d'un premier moyen sensible à la pression (12) dont le déplacement dans un sens permet de commander une valve double (17) dans un sens qui permet de fermer un passage réalisé entre un premier orifice de sortie (4) et l'air libre tout en ouvrant un passage entre un premier orifice (2) d'arrivée d'un fluide sous pression et l'orifice de sortie, la pression de sortie résultante à l'orifice de sortie sollicitant ledit moyen sensible à la pression dans le sens opposé ainsi qu'un deuxième moyen sensible à la pression (20) dont le sens de mouvement lorsque ladite pression du fluide régnant à la sortie augmente de façon à faire déplacer une deuxième valve double (22) dans un sens qui permet de procurer la fermeture d'un passage réalisé entre un deuxième orifice (5) de sortie de fluide sous pression et l'air libre tout en ouvrant un passage réalisé entre un deuxième orifice (3) d'arrivée du fluide sous pression et ledit deuxième orifice de sortie (5) la pression résultante sollicitant le deuxième moyen sensible à la pression dans le sens opposé en vue de provoquer un phénomène de recouvrement dans la deuxième valve caractérisée par ledit moyen de mouvement principal et possédant une plage de mouvement qui permet de limiter la pression régnant au premier orifice de sortie, le premier moyen (12) sensible à la pression possédant une surface (32) sensible à la pression et distincte laquelle, lorsqu'elle est sollicitée par une pression qui correspond à la présence au deuxième orifice de sortie (5) d'un fluide sous pression, agit dans un sens permettant d'assister l'action sur le premier élément sensible à la pression (12) du fluide sous pression se trouvant au premier orifice de sortie (4).

2. Valve de régulation de pression pour double circuit de fluide telle que décrite à la revendication 1, caractérisée en ce que la surface distincte sensible à la pression est dimensionnée de telle façon que la pression limitée pouvant être obtenue au premier orifice de sortie (2) lorsque la pression du fluide se trouvant au deuxième orifice de sortie est nulle soit sensiblement égale à celle qui peut être obtenue lorsque la pleine pression normale, est appliquée au deuxieme orifice de sortie.

3. Valve de régulation de pression pour double circuit de fluide telle que décrite à la revendication 1 ou à la revendication 2, caractérisée en ce que le premier moyen (12) sensible à la pression comporte un piston épaulé.

4. Valve de régulation de pression pour double circuit de fluide telle que décrite à la revendication 1, 2 ou 3, caractérisée en ce que l'élément de valve et le siège de la valve de sortie de la première valve (15, 17) sont montés dans le premier moyen (12) sensible à la pression et en ce que l'élément de valve et le siège de la valve de sortie de la deuxième valve (22, 24) sont situés dans le boîtier tandis que les sièges (19, 21) des valves de sortie correspondantes sont montés sur le deuxième élément (20) sensible à la pression.